**Europäisches Patentamt**

**European Patent Office**

**Office européen des brevets**

(19)

(11) Veröffentlichungsnummer: **0 155 500**
**B1**

(12)

# EUROPÄISCHE PATENTSCHRIFT

(45) Veröffentlichungstag der Patentschrift:
**02.09.87**

(21) Anmeldenummer: **85101595.8**

(22) Anmeldetag: **14.02.85**

(51) Int. Cl.⁴: **F 16 B 1/00**

(54) **Raumsparendes Verbindungselement.**

(30) Priorität: **20.03.84 DE 3410080**

(43) Veröffentlichungstag der Anmeldung:
**25.09.85 Patentblatt 85/39**

(45) Bekanntmachung des Hinweises auf die Patenterteilung:
**02.09.87 Patentblatt 87/36**

(84) Benannte Vertragsstaaten:
**AT BE CH FR GB IT LI NL SE**

(56) Entgegenhaltungen:
**DE-A-2 364 275**
**FR-A-2 266 031**
**FR-A-2 424 430**

(73) Patentinhaber: **Klein, Schanzlin & Becker Aktiengesellschaft, Johann- Klein- Strasse 9, D-6710 Frankenthal (DE)**

(72) Erfinder: **Kuntz, Gerhard, Weiherweg 7, D-6650 Homburg (DE)**
Erfinder: **Kunz, Rudolf, Stettinstrasse 10, D-6660 Zweibrücken (DE)**
Erfinder: **Fritsch, Hartmut, Fussgönnheimer Strasse 34, D-6715 Lambsheim (DE)**

EP 0 155 500 B1

LIBER, STOCKHOLM 1987

## Beschreibung

Die Erfindung betrifft ein raumsparendes, mittels Schraubverbindung zu befestigendes Verbindungselement, zur Befestigung von Teilen aneinander, wobei Ankermittel des Elements eine Ausnehmung in einem dieser Teile hintergreifen insbesondere Bandanker zur Befestigung von Gehäusetellen des Tauchmotors einer Bohrlochpumpe.

Die Problematik solcher Verbindungselemente ergibt sich vor allem daraus, daß diese über Engstellen geführt werden müssen, ohne die sie umgebenden Teile zu berühren. So verlaufen beispielsweise die Bandanker von Tauchmotoren zwischen der Motorwand und dem Wickelkopf des Stators.

Da solche Tauchmotoren vor allem in engen Tiefbrunnen eingesetzt werden, ergibt sich wegen der Notwendigkeit hoher Leistung bei geringem Durchmesser des Motors ein sehr geringer Abstand zwischen dem Wickelkopf und der Motorwand. Der geringe Abstand macht die Verwendung von Zugankern unmöglich, die einen konstanten Durchmesser über ihre gesamte Länge besitzen. Man behilft sich daher mit Bandankern, die lediglich in ihrem Gewindeteil einen kreisförmigen Querschnitt besitzen, darunter aber abgeflacht und unter Umständan auch noch gekröpft sind. Im abgeflachten Teil sind die Bandanker zur Erreichung einer vorgegebenen Zugfestigkeit gegenüber dem Durchmesser des Gewindeteiles verbreitert. Die Abflachung hat allerdings zur Folge, daß die Torsionssteifigkeit dieser Partie gegenüber dem runden Teil herabgesetzt wird. Dies wiederum führt dazu, daß selbst bei der Verwendung hochwertiger Werkstoffe und dem Einsatz aufwendiger Fertigungsverfahren für die Bandanker die Gefahr einer Verwindung im flachen Teil nicht auszuschließen ist. Wird nämlich das noch als unbedenklich geltende Drehmoment beim Anziehen der Muttern überschritten, kann es geschehen daß der abgeflachte und verbreitete Teil verformt und gegen den Wickelkopf gedrückt wird. Eine hierbei entstehende Verletzung des Wickelkopfes hat bei wassergefüllten Tauchmotoren schließlich den Ausfall des Motors zur Folge.

Der Erfindung liegt die Aufgabe zugrunde, ein raumsparendes Verbindungselement zu schaffen, welches vor einer Torsion oder einer Berührung der es umgebenden Teile sicher ist. Diese Aufgabe wird erfindungsgemäß gelöst durch einen Grundkörper geringer Dicke, welcher weitgehend dem Ausschnitt aus einer Zylindermantelfläche entspricht und der an einem Ende mit einem oder mehreren Ankerteilen versehen ist, während am gegenüberliegenden Ende zwei oder mehrere Gewindebolzen vorzugsweise durch Schweißung befestigt sind.

Zweckmäßige Ausgestaltungen des Erfindungsgegenstandes ergeben sich aus den Unteransprüchen.

Die über ein schalenförmiges Element erfolgende Zusammenfassung mehrerer, bis dahin einzeln eingesetzter Gewindebolzen führt zu einen torsionssteifen Verband, der vör allem im engen Wickelkopfraum noch weniger Platz beansprucht als die bisher verwendeten Bandanker.

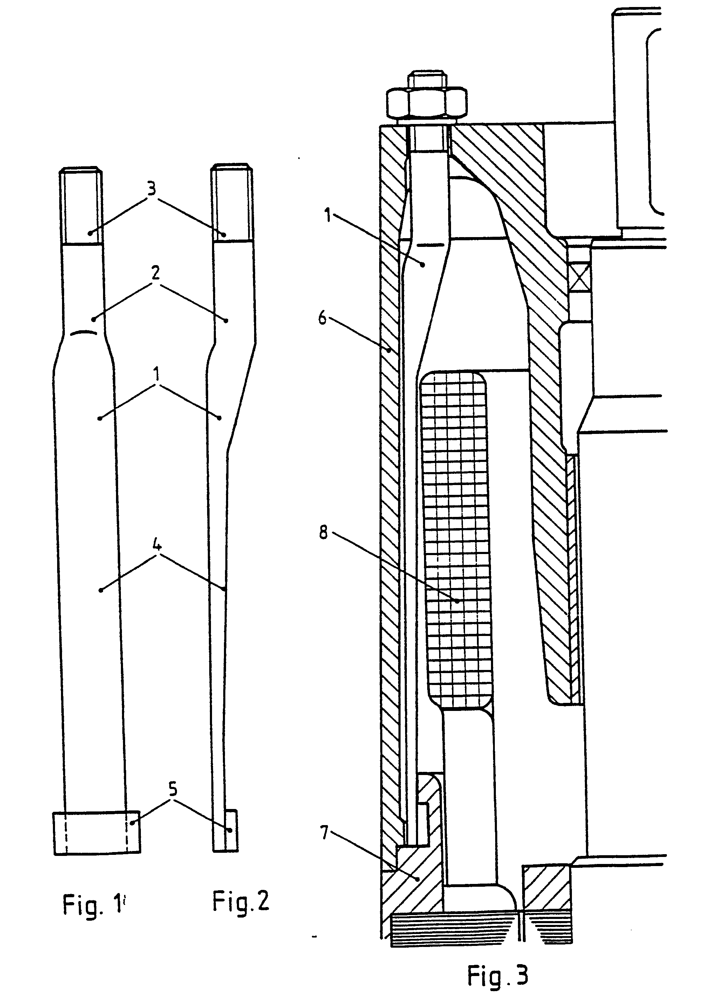

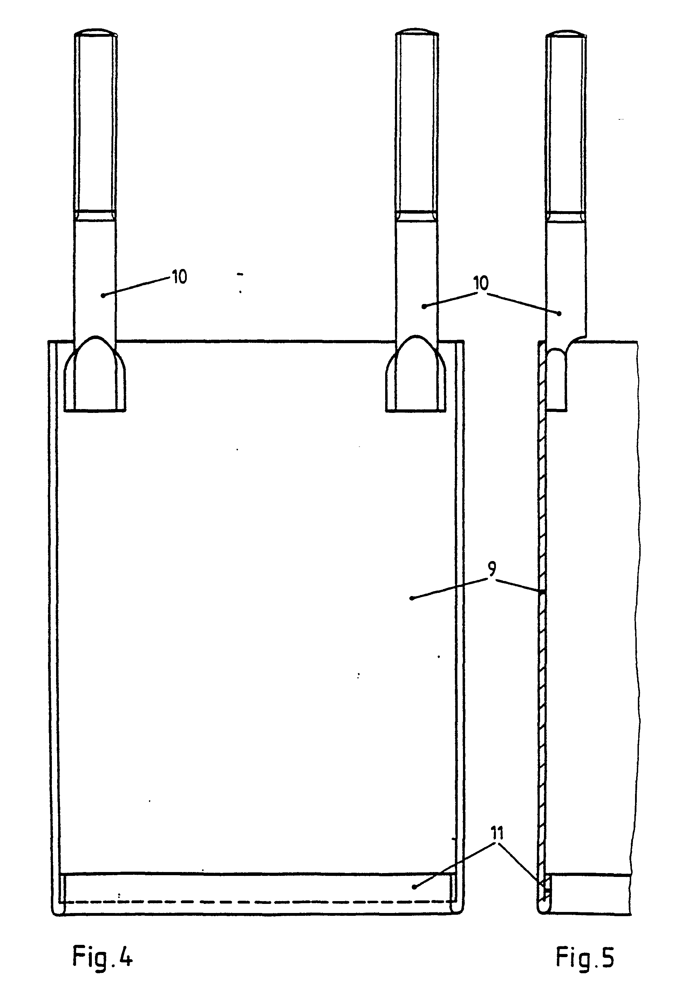

Anhand eines Ausführungsbeispiels wird die Erfindung näher erläutert. Die Zeichnung zeigt in den Fig. 1 bis 3 die Gestaltung und die Anordnung der bisher verwendeten Bandanker, während in den Fig. 4 bis 6 ein erfindungsgemäßes Verbindungselement und dessen Anordnung in einem Tauchmotor dargestellt sind.

Der den Fig. 1 bis 3 entnehmbare herkömmliche Bandanker 1 ist mit einem zylindrischen Teil 2 ausgestattet, auf dem ein Gewinde 3 angeordnet ist. Der zylindrische Teil 2 geht über eine Kröpfung in einen flachen und verbreiterten Teil 4 über, an dessen Ende ein Ankerteil 5 vorgesehen ist.

Der in der Fig. 3 ausschnittweise dargestellte Tauchmotor besitzt einen Lagerträger 6, welcher von einer Mehrzahl von Bandankern 1, die über den Umfang des Tauchmotors verteilt sind, mit dem Stator 7 fest verbunden ist. Wie aus der Abbildung erkennbar, ist der Raum zwischen dem Lagerträger 6 und dem Wickelkopf 8 des Tauchmotors so eng, daß es schon bei einer geringen Torsion des flachen Teils 4 des Bandankers 1 zu einer Berührung und sehr leicht auch einer Verletzung des Wickelkopfes 8 kommen kann.

Das in den Fig. 4 und 5 als Einzelteil dargestellte erfindungsgemäße Verbindungselement besteht aus einem Blechkörper 9, an dem zwei Gewindebolzen 10 angeschweißt sind. Der Blechkörper 9 stellt einen Ausschnitt aus einer Zylindermantelfläche dar. Zur Bildung von Ankerteilen 11 ist seine untere Kante umgebördelt.

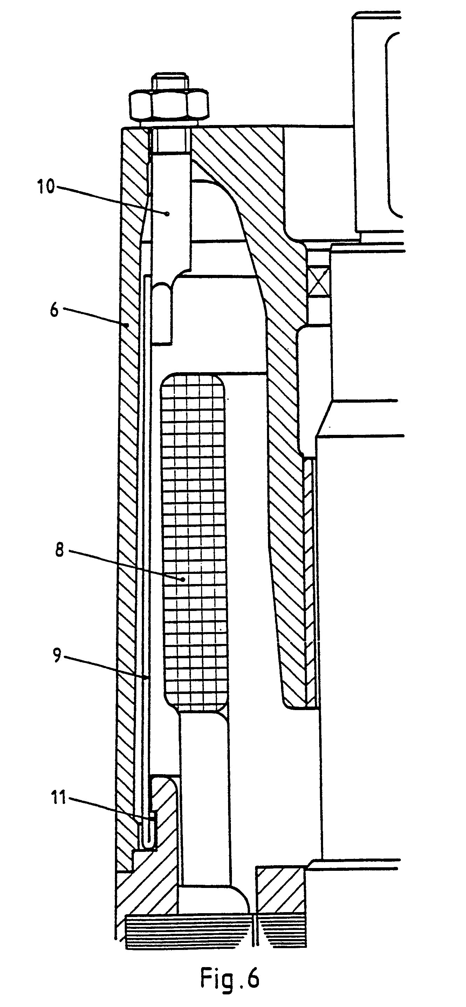

Der in der Fig. 6 dargestellte Ausschnitt aus einem Tauchmotor macht deutlich, mit welch geringem Platzbedarf das erfindungsgemäße Verbindungselement auskommt. Dies wird vor allem an dem großen Abstand zwischen dem Blechkörper 9 und dem Wickelkopf 8 deutlich.

Die Anzahl und Größe der zur Befestigung des Lagerträgers 6 zu verwendenden Verbindungselemente und die Anzahl der jeweils auf einem Verbindungselement zu befestigenden Gewindebolzen läßt sich im Rahmen der durch den Durchmesser des Tauchmotors und der Anzahl der im Lagerträger 6 befindlichen Befestigungslöcher frei bestimmen.

## Patentansprüche

1. Raumsparendes, mittels Schraubverbindung zu befestigendes Verbindungselement zur Befestigung von Teilen aneinander, wobei Ankermittel des Elements eine Ausnehmung in einem dieser Teile hintergreifen insbesondere Bandanker zur Befestigung von Gehäuseteilen des Tauchmotors einer Bohrlochpumpe, gekennzeichnet durch einen Grundkörper (9) geringer Dicke, welcher weitgehend dem Ausschnitt aus einer Zylindermantelfläche entspricht und der an einem Ende mit einem oder mehreren Ankerteilen (11) versehen ist, während am gegenüberliegenden Ende zwei oder mehrere Gewindebolzen (10) vorzugsweise durch Schweißung befestigt sind.

2. Verbindungselement nach Anspruch 1, dadurch gekennzeichnet, daß der Grundkörper (9) aus Blech besteht.

3. Verbindungselement nach den Ansprüchen 1 und 2, dadurch gekennzeichnet, daß das bzw. die Ankerteile (11) durch die umgebördelte Kante des Grundkörpers (9) gebildet sind.

4. Verbindungselement nach den Ansprüchen 1 und 2, dadurch gekennzeichnet, daß der Grundkörper (9) in an sich bekannter Weise mit der Versteifung dienenden Sicken versehen ist.

## Claims

1. Space-saving connecting elements assembled by screw connection for joining one part to the other by tie means of said element engaging behind a recess in one of said parts, particularly by tie bands for fastening parts of the casing of the submersible motor of a borehole pump, characterized by a basic body (9) of minor thickness corresponding closely to a cutout of the surface of a cylinder jacket provided at one end with one or several tie parts (11) and two or more thread bolts (10) fastened to its opposite end preferably by welding.

2. Connecting element as per claim 1, characterized by its basic body (9) being made of sheet metal.

3. Connecting element as per claims 1 and 2, characterized by its tie part or tie parts (11) resp. being formed by the flanged edge of the basic body (9).

4. Connecting element as per claims 1 and 2, characterized by its basic body (9) being provided with reinforcing seams in a way known to the art.

## Revendications

1. Elément de fixation, peu encombrant, à fixer par vissage, pour assembler les pièces l'une contre l'autre à l'aide de moyens d'ancrage dudit élément qui viennent s'accrocher en arrière d'un creux dans une desdites pièces, surtout des tirants en acier plat pour fixer des pièces du carter du moteur, immergé, d'une pompe de forage, caractérisé par un corps de base (9) de faible épaisseur correspondant largement à une tranche d'un corps de cylindre muni d'un ou de plusieurs éléments d'ancrage (11) à un bout et deux ou plusieurs boulons filetés (10) étant fixés, préférablement par soudage, à l'autre bout.

2. Elément de fixation selon revendication 1, caractérisé par son corps de base (9) réalisé en tôle.

3. Elément de fixation selon revendications 1 et 2, caractérisé par le bord rabattu du corps de base (9) formant l'élément/les éléments d'ancrage (11).

4. Elément de fixation selon revendications 1 et 2, caractérisé par le corps de base (9) étant pourvu de moulures de renfort, réalisées d'une manière connue dans l'art.

Fig. 1    Fig. 2

Fig. 3

Fig.4          Fig.5

Fig.6